(19) Europäisches Patentamt

European Patent Office

Office européen des brevets

(11) **EP 1 021 326 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(21) Anmeldenummer: **98954385.5**

(22) Anmeldetag: **09.10.1998**

(51) Int Cl.7: **B60T 8/00**

(86) Internationale Anmeldenummer:
**PCT/EP98/06417**

(87) Internationale Veröffentlichungsnummer:
**WO 99/019192 (22.04.1999 Gazette 1999/16)**

(54) **VERFAHREN ZUM BESTIMMEN VON ZUSTANDSGRÖSSEN EINES KRAFTFAHRZEUGES**

METHOD FOR DETERMINING VEHICLE STATUS VARIABLES

PROCEDE POUR DETERMINER DES VARIABLES D'ETAT DE VEHICULE

(84) Benannte Vertragsstaaten:
**DE FR GB**

(30) Priorität: **10.10.1997 DE 19744725**

(43) Veröffentlichungstag der Anmeldung:
**26.07.2000 Patentblatt 2000/30**

(73) Patentinhaber: **Continental Teves AG & Co. oHG 60488 Frankfurt (DE)**

(72) Erfinder:
• FENNEL, Helmut
  D-65812 Bad Soden (DE)
• LATARNIK, Michael
  D-61381 Friedrichsdorf (DE)

(56) Entgegenhaltungen:
EP-A- 0 788 955          DE-A- 3 937 966
DE-A- 4 200 061          DE-A- 19 623 595

**Beschreibung**

Die Erfindung bezieht sich auf ein Verfahren der im Oberbegriff des Anspruches 1 beschriebenen Art. Solche Zustandsgrößen werden insbesondere zum Realisieren oder Verbessern von Kraftfahrzeug-Regelungssystemen benötigt, nämlich von Antiblockiersysteme (ABS), Antriebsschlupfregelungen (ASR), Systeme zur elektronischen Regelung der Bremskraftverteilung (EBV), zur Giermomentenregelung (GMR), zur Fahrstabilitätsregelung (ASMS, FSR, FDR), zur Fahrwerksregelung (FWR) und von anderen.

Aus der Europäischen Patentschrift EP 0 444 109 B1 ist bereits ein Verfahren zur Steuerung der Bewegung eines Kraftfahrzeugs bekannt, das auf der Erfassung von Reifenabdrücken beruht. Neben Reifensensoren, die den Reifenlatsch erfassen, werden noch andere Sensoren zum Erfassen der Raddrehgeschwindigkeiten, des Lenkeinschlags, der Lage der Radaufhängungen, der Schwerpunktsbeschleunigung usw. verwendet. Dieses bekannte Regelverfahren sieht vor, daß mittels der Reifenabdrucksensoren die Kräfte und Momente gemessen werden, die auf die einzelnen Reifen einwirken. Diese Meßergebnisse werden zusammen mit den Informationen, die die anderen Sensoren liefern, dazu genutzt, die Bewegung des Kraftfahrzeuges zu steuern. Das Verfahren ist insbesondere für Fahrzeuge vorgesehen, bei denen alle Räder angetrieben werden und gelenkt werden können.

Aus der DE 39 37 966 C2 ist ein Verfahren zur Bestimmung der Kraftschlußverhältnisse zwischen Fahrzeugreifen und Fahrbahn bekannt, bei dem die in dem Fahrzeugreifen in einer horizontalen Richtung und in Normalrichtung beim Durchlaufen des Reifenlatsches auftretenden lokalen Verformungen erfaßt und zur Ermittlung der auf die Reifen wirkenden Kräfte ausgewertet werden. Der Kraftschlußbeiwert wird dann aus dem Verhältnis der Horizontalkraft zur Normalkraft bestimmt.

Der vorliegenden Erfindung liegt nun die Aufgabe zugrunde, auf Basis solcher Reifensensorik Fahrzeugzustandsgrößen zu bestimmen, die insbesondere für Kraftfahrzeug-Regelungssysteme verwertbar sind und die in bezug auf Genauigkeit und Zuverlässigkeit die hohen Anforderungen solcher Systeme erfüllen.

Es hat sich herausgestellt, daß diese Aufgabe mit dem im Anspruch 1 beschriebenen Verfahren gelöst werden kann, dessen Besonderheit darin besteht, daß auf Basis der Meßgrößen, die mit Hilfe von Reifenkraftsensoren ermittelt werden und die Reifen-Längskräfte und -Seitenkräfte sowie die Reifen-Aufstandskräfte wiedergeben, unter Einbeziehung von in Korrekturstufen bestimmten, geschätzten und/oder errechneten Korrekturgrößen die Gierwinkelgeschwindigkeit und/oder -beschleunigung, der Lenkwinkel und der Schwimmwinkel des Kraftfahrzeugs sowie die Fahrzeuggeschwindigkeit und Fahrzeugbeschleunigung ermittelt werden.

Das erfindungsgemäße Verfahren zur Bestimmung von Fahrzeugzustandsgrößen und eine darauf aufbauende Regelung geht also von den direkt am Reifen auftretenden Momenten und Kräften aus. Schon dadurch werden alle Einflußgrößen erfaßt und Fehlinterpretationen, die auf mehrdeutige Sensorsignale oder Verarbeitungsfehler zurückgehen, vermieden oder erschwert.

Durch die Berücksichtigung von Korrekturgrößen wird die Sicherheit und Zuverlässigkeit der Bestimmung von Fahrzeugzustandsgrößen und die Berücksichtigung der jeweiligen Fahrsituation noch wesentlich erhöht bzw. verbessert.

Nach einem vorteilhaften Ausführungsbeispiel der Erfindung werden in den Korrekturstufen die von den Reifenkräften abhängigen, mit den Reifensensoren ermittelten Größen, Zwischengrößen und die Komponenten dieser Größen in Abhängigkeit von weiteren Meßgrößen, die z.B. mit konventionellen Sensoren, wie Raddrehzahlsensoren, usw. ermittelt wurden, und/oder mit Größen, die die momentane Fahrsituation (wie Kurvenfahrt, Geradeausfahrt, Reibbeiwert etc.) wiedergeben, gewichtet. Zusätzlich können erfindungsgemäß in den Korrekturstufen noch weitere Größen, die von den Motormomenten, der Motordrehzahl, der Getriebe-Gangstufe usw. abhängen, erfaßt und zur Gewichtung der Fahrzeugzustandsgrößen ausgewertet werden. Dadurch läßt sich z.B. eine sehr weitgehende, sehr genaue Anpassung der Regelung an sehr unterschiedliche Situationen erzielen. Außerdem wird die Fehlersicherheit und das rechtzeitige Erkennen eventueller Defekte erhöht.

Nach einem weiteren Ausführungsbeispiel der Erfindung werden die Fahrzeugzustandsgrößen oder Komponenten dieser Größen in separaten Korrekturstufen gewichtet, indem die durch die Reifensensoren bestimmte Größen mit entsprechenden, durch herkömmliche Sensorik und/oder durch die momentane Fahrsituation bestimmten Größen zusammengesetzt und die zusammengesetzten Größen als korrigierte Meßgrößen weiterverarbeitet werden. Dabei hat es sich als zweckmäßig erwiesen, die Gierwinkelgeschwindigkeit, die Längskomponente der Fahrzeuggeschwindigkeit und die Querkomponente der Fahrzeuggeschwindigkeit in separaten Korrekturstufen zu erfassen und auszuwerten.

Weitere Einzelheiten der Erfindung gehen aus der folgenden Beschreibung von Ausführungsbeispielen anhand der beigefügten Abbildungen hervor.

Es zeigen:

Fig. 1  in symbolisch vereinfachter, perspektivischer Darstellung einen Fahrzeugreifen und die an der Aufstandsfläche angreifenden Kräfte,

Fig. 2     schematisch die Aufsicht auf ein Fahrzeug,

Fig. 3     im Diagramm die Abhängigkeit des Schräglaufwinkels eines Rades von der Reifen-Seitenkraft und der Reifen-Aufstandskraft,

Fig. 4     im Blockschaltbild oder Funktionsbild die wichtigsten Komponenten eines Ausführungsbeispiels einer Schaltungsanordnung zur Durchführung des Verfahrens nach der Erfindung und

Fig.5      a) bis c) in symbolischer Darstellung Komponenten und Eingangsgrößen der Korrekturstufen der Schaltung nach Fig. 4.

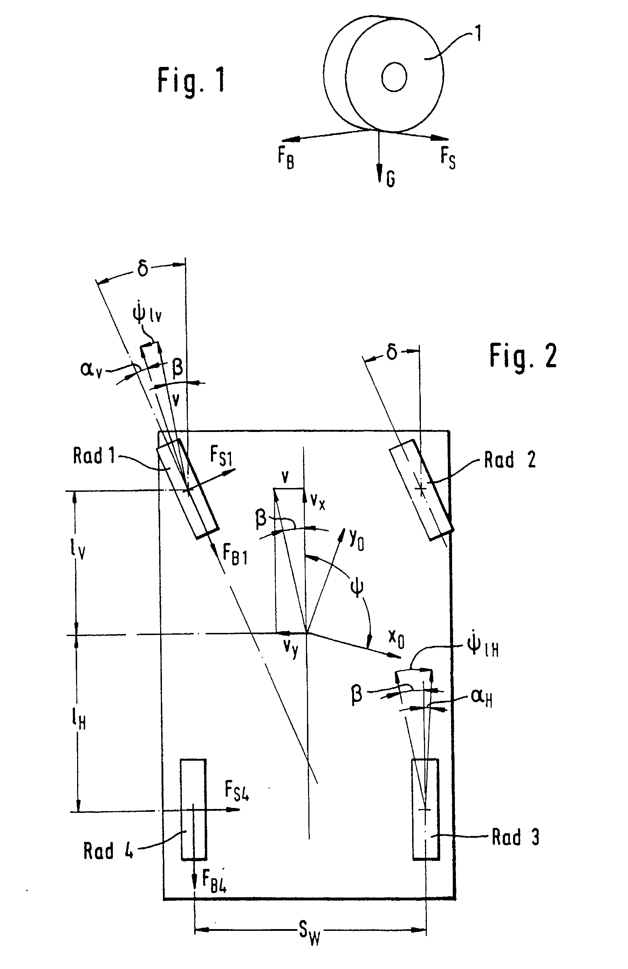

Das erfindungsgemäße Verfahren basiert auf der Verwendung von Reifensensoren, mit denen die auf die Reifen ausgeübten, auf die Fahrbahn übertragenen Kräfte gemessen werden. In Fig. 1 sind symbolisch die an der Aufstandsfläche eines Reifens auftretenden, mit Reifen-Kraftsensoren gemessenen Kraftkomponenten dargestellt. Mit $F_B$ ist die Reifen-Längskraft, mit $F_s$ ist die Reifen-Seitenkraft und mit G die Aufstandskraft bezeichnet. Diese Kräfte werden individuell für jedes Rad 1 - 4 ermittelt und ausgewertet. Die Indizes i (i= 1...4) weisen auf die einzelnen Räder hin; in Übereinstimmung mit der symbolischen Darstellung in Fig. 2 werden üblicherweise das linke Vorderrad mit dem Index 1, das rechte Vorderrad mit 2, das rechte Hinterrad mit 3 und das linke Hinterrad mit 4 bezeichnet.

Der Fig. 2 ist außerdem die Definition der übrigen der hier verwendeten physikalischen Größen zu entnehmen. Von besonderem Interesse sind die Schräglaufwinkel $\alpha_1$, wobei der Index i das jeweilige Rad bezeichnet, der Schwimmwinkel $\beta$, der ein Maß für die Stabilität des momentanen Fahrzustandes ist und daher die Abweichung von der Fahrzeuglängsrichtung ausdrückt. Mit $\Psi$ ist der Gierwinkel bezeichnet, mit $\delta$ der Lenkwinkel. Der Abstand des Fahrzeugschwerpunkts von der Mitte der Vorderachse ist mit $l_V$, der Abstand dieses Schwerpunktes von der Mitte der Hinterachse mit $l_H$ bezeichnet. Die Spurweite ist $S_W$ genannt.

In den Figuren und in den folgenden Erläuterungen werden durch einen über dem Symbol angeordneten Punkt die erste zeitliche Ableitung einer physikalischen Größe, durch zwei Punkte die zweite zeitliche Ableitung dargestellt.

Auf Basis der mit den Reifensensoren ermittelten Längs- und Seitenkräfte $F_{B1} ... F_{B4}$, $F_{S1} ... F_{S4}$ und der Aufstandskräfte $G_1 ... G_4$ werden folgende Fahrzeuggrößen ermittelt:

$v_X, \dot{v}_x$ =     Geschwindigkeit, Beschleunigung des Fahrzeugs in Längsrichtung
$v_y, \dot{y}_y$ =     Geschwindigkeit bzw. Beschleunigung des Fahrzeugs in Querrichtung
$\alpha_1$ =     Schräglaufwinkel für das Rad i
$\beta$ =     Schwimmwinkel
$\dot{\Psi}$ =     Gierwinkelgeschwindigkeit
$\delta$ =     Lenkwinkel.

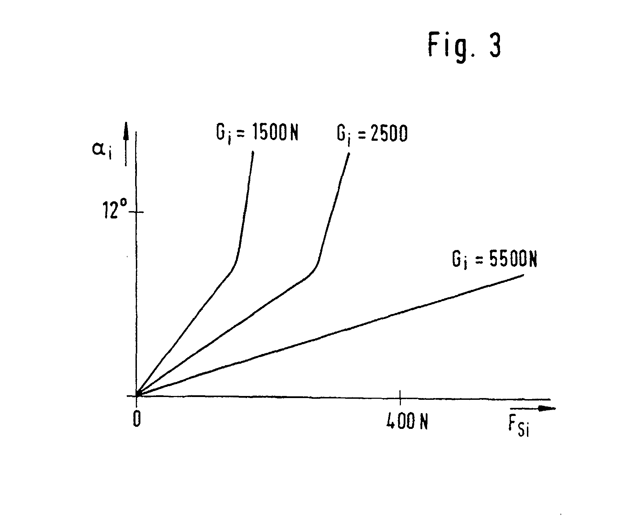

Fig. 3 veranschaulicht die Abhängigkeit des Schräglaufwinkels $\alpha_i$ eines Fahrzeugrades, nämlich des Rades i, von den auf das jeweilige Rad einwirkenden Reifen-Seitenkraft $F_{Si}$. Als Parameter der dargestellten Kurven ist die jeweilige Aufstandskraft $G_i$ für verschiedene Situationen angegeben. Bei relativ geringer Aufstandskraft (von z.B. 1500 N) führt bereits eine relativ geringe Reifen-Seitenkraft zu einem hohen Schräglaufwinkel $\alpha_1$, während z.B. bei einer hohen Aufstandskraft $G_i$ = 5500 N der durch eine bestimmte Reifen-Seitenkraft hervorgerufene Schräglaufwinkel sehr viel geringer ist. Hohe Aufstandskräfte wirken sich also auf die Fahrstabilität eines Fahrzeugs günstig aus. Bei relativ geringer Aufstandskraft der Räder hat bereits eine verhältnismäßig geringe Reifen-Seitenkraft einen hohen Schräglaufwinkel $\alpha_i$ zur Folge.

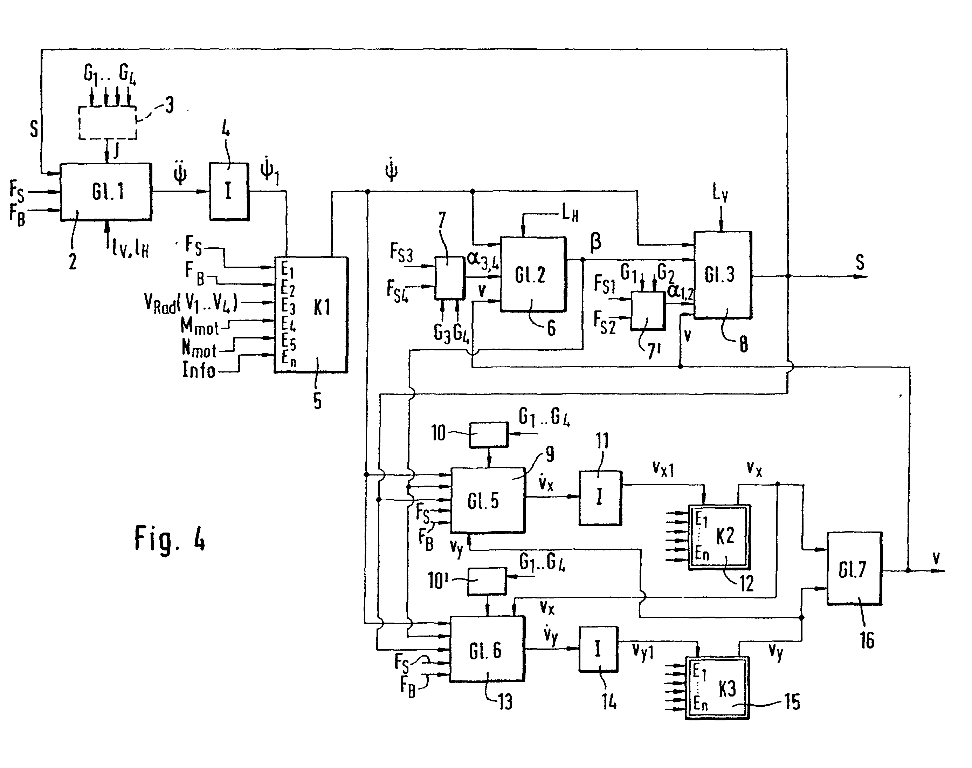

Die Schaltungsanordnung oder Funktionsdarstellung nach Fig.4 enthält eine Eingangsschaltung 2, in der die Gierwinkelbeschleunigung $\ddot{\psi}$ nach einer Gleichung (1) errechnet wird. Hierzu werden der Schaltung 2, wie dies durch die zur Schaltung 2, in der die Berechnung nach der Gleichung (1) stattfindet, führenden Pfeile angedeutet ist, die benötigten Eingangsgrößen $F_{Si}$, $F_{Bi}$, der Lenkwinkel $\delta$ und das Trägheitsmoment J zugeführt. Dieses Trägheitsmoment J wird entweder als eine von der Fahrzeugkonstruktion abhängige Konstante vorgegeben oder auf Basis der Aufstandskräfte $G_1$ bis $G_4$ errechnet, wobei ein Massenverteilungsmodell, das durch den gestrichelten Block 3 symbolisiert ist, zur Anwendung kommen kann. Außerdem sind, wie den zu dem Block 2 führenden Signal-Pfeilen zu entnehmen ist, der Abstand $l_V$ des Fahrzeug-Schwerpunktes von der Mitte der Vorderachse (V) sowie der Abstand $l_H$ dieses Schwerpunktes von der Mitte der Hinterachse (H) als Eingangsgrößen erforderlich.

Die vorliegenden Betrachtungen und Berechnungen sind der Einfachheit halber auf eine Fahrzeug-, Fahr- und Fahrbahnebene beschränkt. Zur noch genaueren Erfassung und Analyse der Vorgänge könnte in im Prinzip gleicher Weise auch die Neigung des Fahrzeugs oder das Wanken bzw. die Vertikalbewegung in die Berechnungen einbezogen werden.

Für die Verarbeitung der Eingangssignale in der Schaltung 2 gilt (Gleichung 1):

$$J\ddot{\Psi} = -F_{SV}\, l_v \cos \delta - F_{BV}\, l_v \sin \delta + F_{SH}\, l_H + 0{,}5(F_{S2} - F_{S1})S_w \sin \delta + (F_{B4} - F_{B3})S_W/2 + 0{,}5(F_{B1} - F_{B2})S_w \cos\delta \qquad (1)$$

Die einzelnen Größen in dieser Gleichung (1) sind wie folgt definiert:

$F_{SV} = F_{S1} + F_{S2}$ ; $\qquad F_{SH} = F_{S3} + F_{S4}$
$F_{BV} = F_{B1} + F_{B2}$ ; $\qquad F_{BH} = F_{B3} + F_{B4}$
$F_S = F_{SV} + F_{SH}$
"$S_W$" bedeutet "Spurweite"

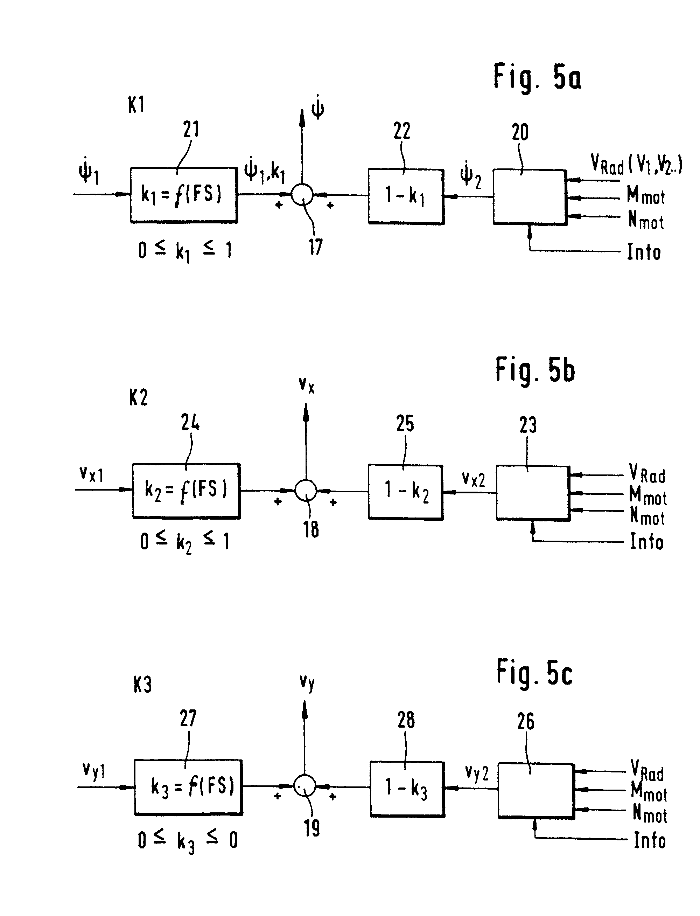

Aus der Gierwinkelbeschleunigung $\dot{\psi}$ wird nach Fig. 4 durch einen Integrationsoperator 4 die Gierwinkelgeschwindigkeit $\dot{\Psi}_1$ gewonnen. Nach Korrektur mit Hilfe einer Schaltung 5 (Korrekturstufe K1), deren Wirkungsweise und Bedeutung nachfolgend anhand der Figur 5a erläutert werden, steht am Ausgang dieser Korrekturstufe ein die Gierwinkelgeschwindigkeit $\dot{\Psi}$ darstellendes Signal zur Verfügung. $\dot{\Psi}$ ist also eine korrigierte Größe, die aus der von den Reifenkräften abgeleiteten Gierwinkelgeschwindigkeit $\dot{\Psi}_1$ unter Berücksichtigung von Anfangswerten und Korrekturwerten unterschiedlicher Art, wie nachfolgend anhand der Fig. 5 noch näher erläutert wird, gewonnen wurde.

Denkbar wäre auch ein Verzicht auf diese Korrektur in der Schaltung 5, wenn auf andere Weise im Regelsystem das in besonders ungünstigen Situationen mögliche Auftreten von Fehlmessungen oder Fehlinterpretationen verhindert werden könnte oder wenn das Auftreten solche Fehler mit Sicherheit zu erkennen wäre.

In einer Schaltung oder Stufe 6 wird nun nach der Beziehung (Gleichung 2)

$$\beta = \dot{\Psi}\, L_H'/v - (\alpha_3 + \alpha_4)/2 \qquad (2)$$

mit $L_H' = (l_H^2 + \tfrac{1}{4}\, S_W^2)^{1/2}$

aus der Gierwinkelgeschwindigkeit $\dot{\Psi}$ unter Berücksichtigung des Schräglaufwinkels $\alpha_3$, $\alpha_4$ der Hinterräder und der Fahrzeuggeschwindigkeit v der Schwimmwinkel $\beta$ errechnet. Der Abstand $l_H$ des Schwerpunktes von der Mitte der Hinterachse und die Spurweite müssen hierzu ebenfalls bekannt sein. Die Schräglaufwinkel $\alpha_3$, $\alpha_4$ der Hinterräder werden mit Hilfe einer Schaltung 7 oder von entsprechenden Algorithmen bzw. Programmschritten (siehe auch Fig. 3) aus den an den Hinterrädern gemessenen Reifen-Seitenkräften $F_{S3}$, $F_{S4}$ und den Aufstandskräften $G_3$, $G_4$ bestimmt.

Der Schwimmwinkel $\beta$ gibt Aufschluß über den Lenkwinkel $\delta$. Der Lenkwinkel wird mit Hilfe einer Schaltung 8 ermittelt, in der der Lenkwinkel $\delta$ aus dem Schwimmwinkel $\beta$, der Gierwinkelgeschwindigkeit $\dot{\Psi}$, der Fahrzeuggeschwindigkeit v und den Schräglaufwinkeln $\alpha_1$, $\alpha_2$ der Vorderräder unter Berücksichtigung des Abstandes $l_V$ zwischen dem Schwerpunkt und der Mitte der Vorderachse und der Spurweite $S_W$ errechnet wird. Für den Rechenprozeß in der Schaltung 8 gilt die Beziehung (Gleichung 3):

$$\delta = (\alpha_1 + \alpha_2)/2 + \beta + \dot{\Psi}\, L_V/v \qquad (3)$$

mit $L_V' = (l_v^2 + S_w^2/4)^{1/2}$

Die Schräglaufwinkel $\alpha_1$, $\alpha_2$ der Vorderräder werden wiederum aus den jeweiligen Reifen-Seitenkraftkomponenten $F_{S1}$, $F_{S2}$ ermittelt.

Die Schwimmwinkelgeschwindigkeit $\dot{\beta}$, der Lenkwinkel $\delta$, die Gierwinkelgeschwindigkeit $\dot{\Psi}$, die Quergeschwindigkeit und die Reifen-Längskräfte $F_{Bi}$ sowie die Reifen-Seitenkräfte $F_{Si}$ bestimmen die Längskomponente der Fahrzeugbeschleunigung $\dot{v}_x$, wobei die Masse m nach der Beziehung (Gleichung 4)

$$m = (G_1 + G_2 + G_3 + G_4)/g \qquad (4)$$

aus den Aufstandskräften $G_1$ bis $G_4$ die errechnet und ausgewertet wird. Eine Schaltung 9 symbolisiert die Rechenvorgänge zur Bestimmung der Längskomponente $v_x$ der Fahrzeugbeschleunigung nach der Beziehung (Gleichung 5):

$$\dot{v}_x = 1/m \, (F_{SV} \sin \delta - F_{BV} \cos \delta - F_{BH}) + v_y(\dot{\Psi} + \dot{\beta}) \tag{5}$$

Nach Integration in einem Block 11 und Korrektur in einer Schaltung 12 (Korrekturstufe K2) wird aus der Längsgeschwindigkeit $v_{x1}$ des Fahrzeugs die korrigierte Längskomponente der Fahrzeuggeschwindigkeit $v_x$ gewonnen.

Die Querkomponente $\dot{v}_y$ der Fahrzeugbeschleunigung wird, analog zur Längskomponente $\dot{v}_x$, mit Hilfe einer Schaltung 13 gewonnen, in der die Querkomponente $\dot{v}_y$ nach folgender Beziehung (Gleichung 6) bestimmt wird:

$$\dot{v}_y = 1/m \, (- F_{SV} \cos \delta - F_{BV} \sin \delta - F_{SH}) + v_x(\dot{\Psi} + \dot{\beta}) \tag{6}$$

Es schließt sich wiederum eine Integration in dem Block 14 an, die zur Ermittlung der Fahrzeug-Quergeschwindigkeit $v_{y1}$ führt. Zur Korrektur (K3) ist eine Schaltung 15 vorgesehen, an deren Ausgang die Querkomponente $v_y$ der Fahrzeuggeschwindigkeit zur Verfügung steht. Schließlich werden die beiden Komponenten $v_x$, $v_y$ in einer als Block 16 dargestellten Schaltung zusammengeführt, in der auf Basis einer Gleichung (7)

$$v = (v_x^2 + v_y^2)^{1/2} \tag{7}$$

die Fahrzeuggeschwindigkeit v aus der Summe der Quadrate beider Komponenten gewonnen wird.

Die Korrekturen in der Korrekturstufe K2 und/oder in der Korrekturstufe K3 sind, ebenso wie die Korrekturen in K1, eventuell entbehrlich oder könnten durch unabhängig von den momemtanen Werten der Geschwindigkeits-Längs- und -Querkomponenten $v_x$ bzw. $v_y$ ermittelt werden .

Fig. 5 dient zur Erläuterung der prinzipiellen Wirkungsweise der Korrekturstufen K1, K2 und K3 der Schaltungsanordnung nach Fig. 4. In ihrer prinzipiellen Wirkungsweise und ihrem Aufbau sind die drei Stufen gleich, wie auch aus dem folgenden hervorgeht. Natürlich werden solche Schaltungen bei Verwendung programmgesteuerter Schaltungen durch Programmschritte oder Programmteile realisiert.

In der Stufe K1, die in Fig. 5a dargestellt ist, wird die Gierwinkelgeschwindigkeit $\dot{\Psi}$ grundsätzlich nach der Beziehung

$$\dot{\Psi}(t_n) = f_\Psi \, [\dot{\Psi}_1(t_n), \, \dot{\Psi}_2(t_n)] \tag{8}$$

gewonnen. In dieser Formel bedeuten $t_a$ den betrachteten Zeitpunkt oder Ermittlungszeitpunkt, die Komponente $\dot{\Psi}_1$ ($t_n$) die zum Zeitpunkt n ermittelte Gierwinkelgeschwindigkeit auf Basis der gemessenen Reifenkräfte. Die Komponente $\dot{\Psi}_2$ ($t_n$) bezeichnet die auf Basis der konventionellen Radsensorik, mit Hilfe von Motormomentsensoren, Motordrehzahlsensoren usw. und gewonnenen und errechneten Einfluß- und Korrekturgrößen. Auch andere, in dem System verfügbare Informationen können zusätzlich ausgewertet werden, d.h. bei der Bildung der Komponente $\dot{\Psi}_2(t_n)$ berücksichtigt werden. Solche zusätzlichen Informationen werden beispielsweise über interne Bus-Verbindungen, an die auch andere KFZ-Regelungssysteme und Sensoren angeschlossen sind, geliefert. Die momentan eingelegte Gangstufe ist ein Beispiel für eine weitere Einflußgröße.

Figur 5a veranschaulicht das Zusammenwirken der einzelnen Einfluß- und Korrekturgrößen. In einem Addierer 17 werden die aus den Reifenkräften abgeleitete, gewichtete Kompomnente $\dot{\Psi}_1 k_1$ und die aus den übrigen Informationen gewonnene, ebenfalls gewichtete Komponente $\dot{\Psi}_2$ (1-$k_1$) zusammengesetzt.

Die Gierwinkelgeschwindigkeitskomponenten werden im Arbeitstakt oder verarbeitungstakt korrigiert. Es gilt nach Gleichung (9):

$$\dot{\Psi}_1(t_{n+1}) = \dot{\Psi}(t_n) + \int_{t_n}^{t_{n+1}} \ddot{\Psi} \, dt \tag{9}$$

Es wird grundsätzlich die beste aktuelle Messung und Schätzung der Gierwinkelgeschwindigkeit dem nächsten Berechnungsschritt (n+1) als Anfangswert zugrunde gelegt.

In der Größe $\ddot{\psi}$ sind die momentan vorhandenen, aus der konventionellen Sensorik und aus den anderen Quellen hergeleiteten, z.B. über die Bus-Verbindung zur Verfügung gestellten und je nach Situation, Fahrzeugtyp, Antriebsart usw. gewichteten Informationen enthalten. Für ein Fahrzeug mit Frontantrieb gilt beispielsweise

$$\dot{\Psi}_2(t_n) = ( v_3 - v_4)/S_w \cdot 1/(1+ v2/v_{CH}2) \tag{10}$$

Für ein Fahrzeug mit Heckantrieb gilt dagegen:

$$\dot{\Psi}_2(t_n) = (v_2 - v_1)/(S_w \cos \delta)\cdot 1/(1+ v2/v_{CH}2) \tag{11}$$

mit

$$\delta = (v_1 - v_2) (l_v + l_H)/S_w$$

$$v_{CH}2 = (l_v + l_H)2c_v c_H/m(c_H l_H - c_v l_v) \tag{12}$$

In diesen Formeln sind $c_v$, $c_H$ die Seitenkraft-Schräglaufwinkelbeiwerte für die Vorderräder (V) und für die Hinterräder (H).

Der Einfluß der aus der konventionellen Reifensensorik und den übrigen Informationen abgeleiteten Größen auf das Regelgeschehen wird entweder durch einen konstanten Wert $k_1$ oder durch einen variablen, von der Fahrsituation abhängigen Wert ($k_1$ = f(FS)) korrigiert, wobei grundsätzlich eine Korrektur der Meßwerte oder eine Kompensation der fehlenden oder der relativ unsicheren Informationen über andere, aus der herkömmlichen Sensorik und/ oder aus den übrigen Informationsquellen abgeleiteten Erkenntnissen stattfindet.

Für die Korrekturstufen K2, K3 gilt entsprechendes. In der Korrekturstufe K2 nach Fig. 5b wird in prinzipiell gleicher Weise wie in der Stufe K1 die Fahrzeuglängsgeschwindigkeit nach der Beziehung

$$v_x(t_n) = f_{vx} [v_{x1}(t_n), v_{x2}(t_n)] \tag{13}$$

ermittelt, wobei wiederum die Komponente $v_{x1}(t_n)$ die auf Basis der gemessenen Reifenkräfte ermittelten Informationen darstellt und die Komponente $V_{x2}(t_n)$ die aus der konventionellen Sensorik, insbesondere Radsensorik, und den anderen Quellen entnommenen, z.B. über die Bus-Verbindung angelieferten Informationen enthält und verarbeitet.

Es wird wiederum der Regelung der aktuelle, d.h. im Augenblick beste, durch Messung, Schätzung, Approximation usw. ermittelte Wert nach der Beziehung

$$v_{x1}(t_{n+1}) = v_x(t_n) + \int_{t_n}^{t_{n+1}} v_x \, dt \tag{14}$$

zugrunde gelegt.

In einer bestimmten Situation könnte beispielsweise gelten:

$$v_{x2}(t_n) = V_{REF,ABS} \tag{15}$$

Die Größe $v_{REF,ABS}$ wäre in diesem Fall die von einem Antiblockiersystem (ABS) zur Verfügung gestellte, dort errechnete Fahrzeug-Referenzgeschwindigkeit. Für die Funktion $f_{vx}$ gilt dann

$$f_{vx}[v_{x1}, v_{x2}] = k_2 x \, v_{x1} + (1 - k_2)v_{x2}$$

$$0 \leq k_2 \leq 1$$

In diesem Fall ist $k_2$ eine Konstante oder eine Funktion der Fahrsituation; beispielsweise wird $k_2 = 0$ oder nähert sich 0 an, wenn eine stabile Fahrsituation erkannt wurde; eine solche stabile Situation liegt z.B. unter folgenden Bedingungen vor:

- Geradeausfahrt ($F_s \cong 0$; $v_1$, $v_2$, $v_3$, $v_4$ sind annähernd gleich)
- Das Motormoment wird vollständig für die Traktion eingesetzt:

$$M_{mot} = 2 \, i_s \, F_{B,links} = 2 \, i_s \, F_{B,\,rechts} \tag{16}$$

mit      $i_s$ = Getriebe-Übersetzungsfaktor

Je nach Situation und zur Verfügung stehenden Meßdaten können auch andere Kriterien als Hinweis auf eine stabile Fahrsituation ausgewertet werden.

Fig. 5c , die die Korrekturstufe K3 widergibt, dient zur Herleitung der Fahrzeugquergeschwindigkeit $v_y(t_n)$. Analog zur oben geschilderten Errechnung der Fahrzeuglängsgeschwindigkeit gilt für die Fahrzeugquergeschwindigkeit ganz allgemein die Beziehung:

$$v_y(t_n) = f_{vy}[v_{y1}(t_n), v_{y2}(t_n)] \tag{17},$$

wobei entsprechend den anhand der Korrekturschaltung K2 beschriebenen Zusammenhängen die Komponente $v_{y1}$ dieser Beziehung die auf Basis der gemessenen Reifenkräfte ermittelte Fahrzeugquergeschwindigkeit darstellt. $v_{y2}$ ist wiederum die von den übrigen Informationen abhängige Komponente; es gilt in analoger Weise das oben im Zusammenhang mit der Errechnung der Längskomponente $v_{x2}$ Ausgeführte.

Für die fortlaufende Berechnung und Aktualisierung der Ergebnisse gilt

$$v_{y1}(t_{n+q}) = v_y(t_n) + \int_{t_n}^{t_{n+1}} \dot{v}_y \, dt \tag{18}$$

Folglich ist

$$f_{vy}[v_{y1}, v_{y2}] = k_3 \, v_{y1} + (1 - k_3) \, v_{y2}$$

$$0 \leq k_3 \leq 1 \tag{19}$$

$k_3$ ist auch in diesem Fall eine Konstante oder eine Funktion der Fahrsituation, die in derzuvor erläuterten Weise ermittelt wird.

Zurück zum Ausführungsbeispiel nach Fig. 5a: Die Komponente $\dot{\psi}_2$ wird nach Fig. 5a mit Hilfe einer Schaltung oder einer durch Programmierung realisierten Funktion 20 errechnet, wobei die Berechnungen auf Basis von Informationen und Signalen durchführt werden, die mit den konventionellen Drehzahlsensoren und/oder mit anderen bekannten Informationsquellen und Sensoren gewonnen wurden. Als Beispiel für Eingangsgrößen sind in Fig. 5a das aktuelle Motormoment $M_{mot}$, die Motordrehzahl $N_{mot}$, die speziellen Bedingungen für die Übertragung des Motormomentes auf die Straße (z.B. der eingelegte Gang) und andere Gegebenheiten - symbolisiert durch den Eingangspfeil ▒Info▒ -, die die Auswirkung des Motormomentes auf das Raddrehverhalten beeinflussen, angegeben. Dies sind wichtige Größen zur Erfassung des momentanen dynamischen Zustandes des Fahrzeugs.

Bei einer Geradeausfahrt des Fahrzeugs, bei der die Seitenkräfte naturgemäß klein sind, bei einer Kurvenfahrt, bei hohen und bei niedrigen Reibbeiwerten, bei homogener und inhomogener Fahrbahn, bei geringen und bei hohen Geschwindigkeiten usw. ergeben sich jeweils unterschiedliche Fahrsituationen, die auf die Aussagekraft der über die Reifensensorik ermittelten Fahrzeugzustandsgrößen im Vergleich zu den Kompensationsgrößen großen Einfluß besitzen. Daher ist es zweckmäßig, die Komponente $\dot{\psi}_1$, die aus der Reifensensorik abgeleitet ist, und die mit herkömmlichen Radsensoren etc. gewonnene Komponente $\underline{\Psi}_2$ in Abhängigkeit von den unterschiedlichen Fahrsituationen zu gewichten. Dies geschieht nach Fig. 5a in den Schaltungen oder Programmschritten 21, 22. Eine Annäherung von $k_1$ an den Wert 1 bedeutet einen hohen Einfluß bzw. eine hohe Abhängigkeit des Regelgeschehens von den mit der Reifensensorik gemessenen Werten, während ein kleiner Wert von $k_1$, z.B. $k_1=0$ oder nahe 0, eine weitgehende Abhängigkeit der Regelung von den auf andere Weise ermittelten Korrektur- und Kompensationswerten bedeutet.

Für die Wirkungsweise der Korrekturstufen K2 (Fig. 5b) und K3 (Fig. 5c), die die Schaltungen 23-25 und 26-28 umfassen, gilt prinzipiell das gleiche wie für die anhand der Figur 5a erläuterte Korrekturstufe K1. Die mit der Schaltungsanordnung nach Fig. 4 gewonnenen Geschwindigkeitskomponenten $v_{x1}$ und $v_{y1}$, die weitgehend - bis auf die Korrektur in K1 - von den Reifensensorik-Meßwerten abhängig sind, werden mit Hilfe der der Korrekturstufen und Schaltungen nach den Fig. 5b und Fig. 5c in Abhängigkeit von den Größen $v_{x2}$ und $v_{y2}$ und von den Faktoren $k_2$ und $k_3$ gewichtet. Die Größen $v_{x2}$ und $v_{y2}$ sind wiederum von verschiedenen Größen, z.B. von Radsensorsignalen, der Fahrsituation und den zuvor geschilderten Einflüssen oder von fest vorgegebenen Größen abhängig. Die Gewichtung der aus den verschiedenen Quellen und Berechnungsmethoden stammenden Komponenten ist also, in gleicher Weise wie anhand der Fig. 5a beschrieben, von der Fahrsituation und "Treffsicherheit" bzw. Zuverlässigkeit und Genauigkeit der ermittelten Größen abhängig.

Die gewichteten Größen werden nach Fig. 5a in dem Addierer 17, in den Fig. 5b und 5c in Addierern 18 und 19 zusammengesetzt.

Auf Basis der mit dem erfindungsgemäßen Verfahren ermittelten Fahrzeugzustandsgrößen lassen sich die eingangs erwähnten Kraftfahrzeug-Regelungssysteme und auch andere entscheidend verbessern. Da die Regelungsgrößen direkt von den Fahrzeugrädern abgeleitet werden und damit unmittelbar die zu regelnde Größe oder Größen erfaßt werden, ist die Gefahr von Fehlinterpretationen und Verfälschungen während des Informations-Verarbeitungsvorgangs vergleichsweise gering. Diese Sicherheit wird durch die Überwachung und Korrelation mit den auf herkömmlichen Wegen gewonnenen Informationen - dies findet in den Korrekturstufen K1 bis K3 statt - noch entscheidend verbessert, so daß auch extreme Bedingungen erfaßt und Fehlfunktionen unmittelbar erkannt werden. Es ist zu erwarten, daß dadurch der für das komplette Regelungssystem erforderliche Gesamtaufwand vergleichsweise gering wird.

**Patentansprüche**

1. Verfahren zum Bestimmen von Fahrzeugzustandsgrößen, bei dem die auf die einzelnen Räder und Reifen wirkenden Kräfte mit Reifenkräftesensoren gemessen und zum Ermitteln von Regelgrößen für ein Kraftfahrzeug-Regelungssystem, wie ABS, ASR, EBV, GMR, ASMS, FSR, FDR, FWR etc., ausgewertet werden, **dadurch gekennzeichnet, daß** auf Basis von Meßgrößen ($F_{Si}$, $F_{Bi}$, $G_i$), die mit Hilfe der Reifenkräftesensoren ermittelt wurden und die die Reifen-Längskräfte ($F_{Si}$) und - Seitenkräfte ($F_{Bi}$) sowie die Reifen-Aufstandskräfte ($G_i$) der Räder (i; i=1...4) wiedergeben, unter Einbeziehung von in Korrekturstufen (K1, K2, K3) bestimmten, geschätzten und/oder errechneten Korrekturgrößen oder Korrekturwerten, die Gierwinkelgeschwindigkeit ($\dot{\Psi}$) und/oder die Gierwinkelbeschleunigung, der Lenkwinkel ($\delta$) und der Schwimmwinkel ($\beta$) des Fahrzeugs sowie die Fahrzeuggeschwindigkeit ($v$) und/oder die Fahrzeugbeschleunigung ermittelt werden.

2. Verfahren nach Anspruch 1, **dadurch gekennzeichnet, daß** in den Korrekturstufen (K1, K2, K3) die von den Reifenkräften abhängigen bzw. mit den Reifenkraftsensoren ermittelten Größen und/oder Komponenten dieser Größen in Abhängigkeit von weiteren Meßgrößen, die mit konventionellen Sensoren, wie Raddrehzahlsensoren, etc., ermittelt wurden, und/oder mit die momentane Fahrsituation wiedergebenden Größen wie z.B. Kurvenfahrt, Geradeausfahrt, Reibbeiwert etc. gewichtet werden.

3. Verfahren nach Anspruch 1 oder 2, **dadurch gekennzeichnet, daß** in den Korrekturstufen (K1, K2, K3) ausschließlich oder zusätzlich Größen, die von den Motormomenten ($M_{mot}$), der Motordrehzahl, der Getriebe-Gangstufe etc. abhängig sind, erfaßt und zur Gewichtung der Fahrzeugzustandsgrößen oder der Komponenten dieser Größen ausgewertet werden.

4. Verfahren nach einem oder mehreren der Ansprüche 1 bis 3, **dadurch gekennzeichnet, daß** in separaten, voneinander unabhängigen Korrekturstufen (K1, K2, K3) Fahrzeugzustandsgrößen oder Komponenten dieser Größen gewichtet werden, indem die durch die auf Basis der Reifensensorik gemessenen Größen ($\dot{\Psi}_1$, $v_{x1}$, $v_{y1}$) mit entsprechenden, durch herkömmliche Sensorik gewonnenen und/oder von der momentanen Fahrsituation, von den Motormomenten etc. bestimmten Größen ($\dot{\Psi}_2$, $v_{x2}$, $v_{y2}$) zusammensetzt und die zusammengesetzten Größen als korrigierte Größen ($\dot{\Psi}$, $v_x$, $v_y$) weiterverarbeitet werden.

5. Verfahren nach Anspruch 4, **dadurch gekennzeichnet, daß** die auf Basis der Reifenkräfte bzw. der Reifensensorik gemessenen Größen ($\dot{\Psi}_1$, $v_{x1}$, $v_{y1}$) und die mit der herkömmlichen Sensorik gewonnenen und/oder von der momentanen Fahrsituation abhängigen Größen ($\dot{\Psi}_2$, $v_{x2}$, $v_{y2}$) gewichtet (Faktoren $k_1$, $k_2$, $k_3$) und die gewichteten Größen zur Bildung der korrigierten Größen ($\dot{\Psi}$, $v_x$, $v_y$) zusammengesetzt werden.

6. Verfahren nach Anspruch 4 oder 5, **dadurch gekennzeichnet, daß** die Gierwinkelgeschwindigkeit des Fahrzeugs, die Längskomponente der Fahrzeuggeschwindigkeit und die Querkomponente der Fahrzeuggeschwindigkeit in separaten Korrekturstufen (K1, K2, K3) gewichtet und zur Bildung der korrigierten Größen ($\dot{\Psi}$, $v_x$, $v_y$) in Addierern (17, 18, 19) mit den durch die herkömmlichen Sensorik gewonnenen und/oder von der momentanen Fahrsituation abhängigen, ebenfalls gewichteten Größen zusammengesetzt werden.

7. Verfahren nach einem oder mehreren der Ansprüche 1 bis 6, **dadurch gekennzeichnet, daß** zur Bestimmung der Fahrzeugzustandsgrößen ($\dot{\Psi}$, $v_x$, $v_y$) die auf Basis der Reifenkräfte ermittelten Größen ($\dot{\Psi}_1$, $v_{x1}$, $v_{y1}$) in jedem Rechenschritt ($t_{n+1}$) durch Korrelation mit den aktuellen, mit Hilfe der herkömmlichen Sensorik gewonnenen und/ oder von der momentanen Fahrsituation abhängigen Größen nach den Gleichungen (9, 14, 18)

$$\dot{\Psi}_1(t_{n+1}) \;=\; \dot{\Psi}(t_n) \;+\; \int_{t_n}^{t_{n+1}} \ddot{\Psi}\, dt \qquad\qquad (9)$$

bzw.

$$v_{x(y)1}(t_{n+1}) \;=\; v_{x(y)}(t_n) \;+\; \int_{t_n}^{t_{n+1}} \dot{v}_{x(y)}\, dt \qquad\qquad (14, 18)$$

aktualisiert werden, mit

$$\dot{\Psi}(t_n)\, f_\Psi\, [\,\dot{\Psi}_1(t_n),\, \dot{\Psi}_2(t_n)] \qquad\qquad\qquad (8)$$

bzw.

$$v_{x(y)}(t_n) = f_{vx(y)}\, [v_{x1(y1)}(t_n),\, v_{x2(y2)}(t_n)] \qquad\qquad\qquad (13,17),$$

wobei die Komponenten $\dot{\Psi}_1(t_n)$, $v_{x1(y1)}(t_n)$ auf Basis der Reifenkräfte, die Komponenten $\dot{\Psi}_2(t_n)$, $v_{x2(y1)}(t_n)$ mit Hilfe der konventionellen Sensorik etc. gewonnen werden.

8. Verfahren nach einem oder mehreren der Ansprüche 1 bis 6, **dadurch gekennzeichnet, daß** die auf Basis der Reifenkräfte ermittelten Größen ($\dot{\Psi}_1(t_{n+1})$, $v_{x1}(t_{n+1})$, $v_{y1}(t_{n+1})$) durch aktuelle Schätzung auf Basis der momentanen, aktuellen Zustandsgrößen ($\dot{\Psi}(t_n)$, $v_x(t_n)$, $v_y(t_n)$), quasi als Anfangswerte für den nächsten Berechnungsschritt ausgewertet werden, berechnet werden.

**Claims**

1. A method for determining vehicle status quantities, in which the forces acting on the individual wheels and tires are measured and evaluated for the establishment of control quantities for an automotive control system, such as ABS, TCS, EBD, YTC, ASMS, DSC, DDC, etc.,
**characterized in that**, on the basis of measured quantities ($F_{Si}$, $F_{Bi}$, $G_i$) which were established by means of the tire force sensors and which represent the longitudinal tire forces ($F_{Si}$) and lateral tire forces ($F_{Bi}$) as well as the vertical tire forces ($G_i$) of the wheels (i; i=1...4), the angular yaw velocity ($\dot{\psi}$) and/or the angular yaw acceleration, the steering angle ($\delta$) and the side slip angle ($\beta$) of the vehicle as well as the vehicle velocity (v) and/or the vehicle acceleration are established, while including corrective quantities or corrective values determined, estimated and/or calculated in corrective steps (K1, K2, K3).

2. A method according to claim 1,
**characterized in that** the quantities dependent on tire forces or established by the tire force sensors and/or components of these quantities are weighted in the corrective steps (K1, K2, K3) in dependence on other measured quantities that have been established by conventional sensors such as rotational wheel speed sensors, etc., and/or with quantities that represent the momentary driving situation such as cornering, straight ride, coefficient of friction, etc.

3. A method according to claim 1 or 2,
**characterized in that**, in the corrective steps (K1, K2, K3), quantities dependent on engine torques ($M_{mot}$), the engine speed, the transmission gear, etc., are exclusively or additionally detected and evaluated for weighting the vehicle status quantities or the components of these quantities.

4. A method according to one or more of the claims 1 to 3,
**characterized in that** vehicle status quantities or components of these quantities are weighted in separate corrective steps (K1, K2, K3) which are independent of each other, such weighting being effected by the quantities ($\dot{\psi}_1$, $v_{x1}$, $v_{y1}$) measured on the basis of the tire sensor devices being combined with corresponding quantities ($\dot{\psi}_2$, $v_{x2}$, $v_{y2}$) gained from conventional sensor devices and/or determined by the momentary driving situation, the engine torques, etc., and the combined quantities are further processed as corrected quantity ($\dot{\psi}$, $v_x$, $v_y$).

5. A method according to claim 4,
**characterized in that**, for determining the vehicle status quantities ($\dot{\psi}$, $v_x$, $v_y$), the quantities ($\dot{\psi}_1$, $v_{x1}$, $v_{y1}$) measured on the basis of the tire forces or the tire sensor devices, respectively, and the quantities ($\dot{\psi}_2$, $v_{x2}$, $v_{y2}$) gained from conventional sensor devices and/or dependent on the momentary driving situation are weighted (factors $k_1$, $k_2$, $k_3$), and that the weighted quantities are combined to create the corrected quantities ($\dot{\psi}$, $v_x$, $v_y$).

6. A method according to claim 4 or 5,
**characterized in that** the angular yaw velocity of the vehicle, the longitudinal component of the vehicle velocity, and the lateral component of the vehicle velocity are weighted in separate corrective steps (K1, K2, K3) and combined in summers (17, 18, 19) with the quantities gained from conventional sensor devices and/or dependent on the momentary driving situation and likewise weighted, for the creation of the corrected quantities ($\dot{\psi}$, $v_x$, $v_y$).

7. A method according to one or more of claims 1 to 6,
**characterized in that**, for determining the vehicle status quantities ($\dot{\psi}$, $v_x$, $v_y$), the quantities ($\dot{\psi}_1$, $v_{x1}$, $v_{y1}$) established on the basis of the tire forces are updated in each computing step ($t_{n+1}$) by correlation with the current quantities ($_2$, $v_{x2}$, $v_{y2}$) gained from conventional sensor devices and/or dependent on the momentary driving situation, according to the equations (9,14,18):

$$\dot{\psi}_1\,(t_{n+1}) \;=\; \dot{\psi}\,(t_n) \;+\; \int_{t_n}^{t_{n+1}} \ddot{\psi}\; dt \qquad\qquad (9)$$

or, respectively,

$$v_{x(y)1}(t_{n+1}) = v_{x(y)}(t_n) + \int_{t_n}^{t_{n+1}} \dot{v}_{x(y)}\, dt \qquad\qquad (14,\ 18)$$

with

$$\dot{\psi}(t_n) = f_\Psi[\dot{\psi}_1(t_n),\ \dot{\psi}_2(t_n)] \qquad\qquad (8)$$

or, respectively,

$$v_{x(y)}(t_n) = f_{vx(y)}[v_{x1(y1)}(t_n),\ v_{x2(y2)}(t_n)] \qquad\qquad (13,17),$$

wherein the components $\dot{\psi}_1(t_n)$, $v_{x1(y1)}(t_n)$ are established on the basis of the tire forces, and the components $\dot{\psi}_2(t_n)$, $v_{x2(y1)}(t_n)$ are established by means of the conventional sensor devices, etc.

8. A method according to one or more of claims 1 to 6, **characterized in that** the quantities ($\dot{\psi}_1(t_{n+1})$, $v_{x1}(t_{n+1})$, $v_{y1}(t_{n+1})$) established on the basis of the tire forces are calculated and evaluated by a current estimate based on the momentary, current status quantities ($\dot{\psi}(t_n)$, $v_x(t_n)$, $v_y(t_n)$), basically as initial values for the next computing step.

## Revendications

1. Procédé de détermination de grandeurs d'état de véhicule, selon lequel les forces s'exerçant sur les différentes roues et différents pneumatiques sont mesurées au moyen de capteurs de force de pneumatique et sont analysées pour l'établissement de grandeurs de régulation pour un dispositif de régulation de véhicule automobile, tel que ABS, ASR, EBV, GMR, ASMS, FSR, FDR, FWR, etc., **caractérisé en ce que**, sur la base de grandeurs de mesure ($F_{Si}$, $F_{Bi}$, $G_i$) qui ont été déterminées au moyen de capteurs de force de pneumatique et qui reproduisent les forces longitudinales de pneumatique ($F_{Si}$), forces transversales de pneumatique ($F_{Bi}$) et forces d'appui de pneumatique ($G_i$) des roues (i ; i = 1...4), avec l'intégration de grandeurs de correction ou valeurs de correction estimées et/ou calculées, déterminées dans des étages de correction (K1, K2, K3), la vitesse d'angle de lacet ($\dot{\Psi}$) et/ou l'accélération d'angle de lacet, l'angle de braquage ($\delta$) et l'angle d'attitude ($\beta$) du véhicule et la vitesse de véhicule (v) et/ou l'accélération de véhicule sont déterminés.

2. Procédé suivant la revendication 1, **caractérisé en ce que**, dans les étages de correction (K1, K2, K3), les grandeurs dépendant des forces de pneumatique ou déterminées par les capteurs de force de pneumatique, et/ou des composantes de ces grandeurs, sont pondérées en fonction d'autres grandeurs de mesure qui ont été déterminées au moyen de capteurs classiques, tels que capteurs de vitesse de rotation de roue, etc., et/ou au moyen de grandeurs reproduisant la situation de conduite momentanée, telles que par exemple conduite en virage, conduite en ligne droite, coefficient de frottement, etc..

3. Procédé suivant la revendication 1 ou 2, **caractérisé en ce que**, dans les étages de correction (K1, K2, K3), des grandeurs qui dépendent des couples moteur ($M_{mot}$), de la vitesse de rotation de moteur, du rapport de démultiplication de boîte de vitesses, etc. sont détectées exclusivement ou en supplément et sont analysées pour la pondération des grandeurs d'état de véhicule ou des composantes de ces grandeurs.

4. Procédé suivant une ou plusieurs des revendications 1 à 3, **caractérisé en ce que**, dans des étages de correction (K1, K2, K3) séparés, indépendants l'un de l'autre, des grandeur d'état de véhicule ou des composantes de ces grandeurs sont pondérées, les grandeurs ($\dot{\Psi}_1$, $v_{x1}$, $v_{y1}$) mesurées sur la base du dispositif capteur de pneumatique faisant l'objet d'une composition avec des grandeurs ($\dot{\Psi}_2$, $v_{x2}$, $v_{y2}$) correspondantes, obtenues au moyen d'un dispositif capteur classique et/ou déterminées par la situation de conduite momentanée, par les couples moteur, etc., et les étant soumise à un traitement et les grandeurs composées étant soumises à un traitement ultérieur en tant que grandeurs corrigées ($\dot{\Psi}$, $v_x$, $v_y$).

5. Procédé suivant la revendication 4, **caractérisé en ce que** les grandeurs ($\dot{\Psi}_1$, $v_{x1}$, $v_{y1}$) mesurées sur la base des forces de pneumatique ou du dispositif capteur de pneumatique et les grandeurs ($\Psi_2$, $v_{x2}$, $v_{y2}$) obtenues au moyen du dispositif capteur classique et/ou dépendant de la situation de conduite momentanée sont pondérées (facteurs $k_1$, $k_2$, $k_3$) et les grandeurs pondérées font l'objet d'une composition pour former les grandeurs corrigées ($\dot{\Psi}$, $v_x$, $v_y$).

6. Procédé suivant la revendication 4 ou 5, **caractérisé en ce que** la vitesse d'angle de lacet du véhicule, la composante longitudinale de la vitesse de véhicule et la composante transversale de la vitesse de véhicule sont pondérées dans des étages de correction (K1, K2, K3) séparés et, pour former les grandeurs corrigées ($\dot{\Psi}$, $v_x$, $v_y$), font l'objet d'une composition, dans des étages d'addition (17, 18, 19), avec les grandeurs obtenues au moyen du dispositif capteur classique et/ou dépendant de la situation de conduite momentanée, également pondérées.

7. Procédé suivant une ou plusieurs des revendications 1 à 6, **caractérisé en ce que**, pour la détermination des grandeurs d'état de véhicule ($\dot{\Psi}$, $v_x$, $v_y$), les grandeurs ($\dot{\Psi}_1$, $v_{x1}$, $v_{y1}$) déterminées sur la base des forces de pneumatique sont actualisées, à chaque pas de calcul ($t_{n+1}$), par corrélation avec les grandeurs actuelles, obtenues au moyen du dispositif capteur classique et/ou dépendant de la situation de conduite momentanée, conformément aux équations (9, 14, 18),

$$\dot{\Psi}_1(t_{n+1}) = \dot{\Psi}(t_n) + \int_{t_n}^{t_{n+1}} \ddot{\Psi} \ dt \qquad (9)$$

$$v_{x(y)1}(t_{n+1}) = v_{x(y)}(t_n) + \int_{t_n}^{t_{n+1}} \dot{v}_{x(y)} \ dt \qquad (14, 18)$$

avec respectivement

$$\dot{\Psi}(t_n) = f_{\Psi} \ [\dot{\Psi}_1(t_n), \dot{\Psi}_2(t_n)] \qquad (8)$$

et

$$v_{x(y)}(t_n) = f_{vx(y)} \ [v_{x1(y1)}(t_n), v_{x2(y2)}(t_n)] \qquad (13, 17)$$

les composantes $\dot{\Psi}_1(t_n)$, $v_{x1(y1)}(t_n)$ étant obtenues sur la base des forces de pneumatique et les composantes $\dot{\Psi}_2(tn)$, $v_{x2(y1)}(t_n)$ au moyen du dispositif capteur classique, etc..

8. Procédé suivant une ou plusieurs des revendications 1 à 6, **caractérisé en ce que** les grandeurs ($\dot{\Psi}_1(t_{n+1})$, $v_{x1}(t_{n+1})$, $v_{y1}(t_{n+1})$) déterminées sur la base des forces de pneumatique sont calculées au moyen d'une estimation actuelle sur la base des grandeurs d'état actuelles, momentanées ($\dot{\Psi}(t_n)$, $v_x(t_n)$, $v_y(t_n)$), sont analysées quasi comme des valeurs initiales pour le pas de calcul suivant.

Fig. 1

Fig. 2

Fig. 3

Fig. 4

EP 1 021 326 B1

Fig. 5a

$K1$

$\dot{\psi}$

21

$\dot{\psi}_1$ → $k_1 = f(FS)$ → $\dot{\psi}_{1,k_1}$

$0 \leq k_1 \leq 1$

17

22

$1 - k_1$ ← $\dot{\psi}_2$

20

→ $V_{Rad}(V_1, V_2..)$
→ $M_{mot}$
→ $N_{mot}$
→ Info

Fig. 5b

$K2$

$v_x$

24

$v_{x1}$ → $k_2 = f(FS)$

$0 \leq k_2 \leq 1$

18

25

$1 - k_2$ ← $v_{x2}$

23

→ $V_{Rad}$
→ $M_{mot}$
→ $N_{mot}$
→ Info

Fig. 5c

$K3$

$v_y$

27

$v_{y1}$ → $k_3 = f(FS)$

$0 \leq k_3 \leq 0$

19

28

$1 - k_3$ ← $v_{y2}$

26

→ $V_{Rad}$
→ $M_{mot}$
→ $N_{mot}$
→ Info